# EUROPÄISCHE PATENTSCHRIFT

(11) **EP 2 755 420 B1**
(45) Veröffentlichungstag und Bekanntmachung des Hinweises auf die Patenterteilung: **03.08.2016**
(21) Anmeldenummer: 13196894.3
(22) Anmeldetag: 12.12.2013
(51) Int. Cl.: H04W 28/08, B64D 11/00, H04W 48/20

(54) **Verfahren zur Lastverteilung in einem drahtlosen, lokalen Netzwerk**
Method for load distribution in a wireless, local area network
Procédé de répartition des charges dans un réseau local sans fil

(30) Priorität: 09.01.2013 DE 102013200187
(43) Veröffentlichungstag der Anmeldung: 16.07.2014
(73) Patentinhaber: Siemens Convergence Creators GmbH, 1210 Wien (AT)
(72) Erfinder: Wolff, Florian, 22453 Hamburg (DE); Brenner, Jörg, 22303 Hamburg (DE); von der Heide, Stefan, 22846 Norderstedt (DE)
(74) Vertreter: Maier, Daniel Oliver

(56) Entgegenhaltungen:
- EP-A1- 1 835 662
- WO-A2-2005/122607
- US-A1- 2006 268 767
- US-A1- 2012 230 189
- US-B1- 7 483 696

## Beschreibung

### Technisches Gebiet

Die Erfindung betrifft ein Verfahren zur Lastverteilung in einem drahtlosen, lokalen Netzwerk, insbesondere einem so genannten Wireless Local Area Network, mit zumindest zwei Zugangspunkten. Über dieses drahtlose, lokale Netzwerk können in einem vorgegebenen Bereich wie z.B. in einem Beförderungsmittel (z.B. Flugzeug, Zug, Schiff, etc.) multimediale Informationsinhalte von einem so genannten On-Board-Server bezogen und auf einer nutzerspezifischen Ausgabeeinheit zur Verfügung gestellt bzw. angezeigt werden, wobei über einen ersten Zugangspunkt des drahtlosen, lokalen Netzwerks von der nutzerspezifischen Ausgabeeinheit eine Verbindung zum On-Board-Server (OB) aufgebaut wird

### Stand der Technik

In vorgegebenen Bereichen wie z.B. Beförderungsmittel für Personen (z.B. Flugzeugen, Zügen, Bussen oder auch Schiffen) sind heutzutage oft Informationssysteme angebracht. Von diesen Informationssystem, welche auch als so genannte Infotainmentsysteme bezeichnet werden, können beispielsweise multimediale Informationsinhalte für Informationszwecke und/oder zur Unterhaltung auf Ausgabeeinheiten übertragen werden. Von derartigen Informationssystemen werden beispielsweise Passagiere während der Nutzung des jeweiligen Beförderungsmittels (z.B. Flugzeug, Schiff, Zug, etc.) mit Informationsangeboten und/oder Unterhaltungsprogrammen versorgt. Die Ausgabeeinheiten zum Anzeigen und Konsumieren dieser multimedialen Informationsinhalte können dabei z.B. fix im Beförderungsmittel angebracht sein wie z.B. Ausgabebildschirme oder mobile nutzerspezifische Ausgabeeinheiten (z.B. Laptop, Tablet-PC, Smartphone, etc.) sein, welche einem Passagier entweder zur Verfügung gestellt oder von diesem ins Beförderungsmittel mitgenommen werden.

In Beförderungsmitteln wie z.B. Flugzeugen umfassen derartige Informationssystem beispielsweise eine zentrale Servereinheit - wie z.B. den so genannten On-Board-Server. Von diesem On-Board-Server kann z.B. mit den nutzerspezifischen Ausgabeeinheiten kommuniziert, Eingaben (z.B. Auswahl von Informationsinhalten, etc.), welche über die nutzerspezifischen Ausgabeeinheiten getätigt werden, verarbeitet und für eine Verteilung der Informationsinhalte an die nutzerspezifischen Ausgabeeinheiten gesorgt werden. Zusätzlich ist üblicherweise eine zum Informationssystem gehörende Datenbank vorgesehen, in welcher die multimedialen Informationsinhalte abgelegt sind. Ausgewählte Informationsinhalte können dann mittels so genanntem Streaming auf die nutzerspezifische Ausgabeeinheit (z.B. Tablet-PC, Smartphone, etc.). Dazu ist allerdings ein lokales Netzwerk im Beförderungsmittel notwendig, über welches von den nutzerspezifischen Ausgabeeinheiten eine Verbindung zum On-Board-Server für eine Auswahl und einen Bezug der multimedialen Informationsinhalte aufgebaut werden kann.

Üblicherweise wird bei einem derartigen Informationssystem z.B. in einem Beförderungsmittel ein drahtloses, lokales Netzwerk wie z.B. eine Wireless Local Area Network oder Wireless LAN z.B. auf Basis der IEEE-Norm 802.11 für eine drahtlose Verteilung der multimedialen Informationsinhalte eingesetzt. Für eine Abdeckung eines vorgegebenen Bereichs (z.B. Innenraum eines Zugs oder Flugzeugs, Passagierschiff, etc.) werden je nach der Größe und benötigter Kapazität des abzudeckenden Bereichs meist mehrere Zugangspunkte oder so genannten Access Points verwendet, über welche dann von den nutzerspezifischen Ausgabeeinheiten (z.B. Tablet-PC, Laptop, Smartphone, etc.) ein Zugang zum drahtlosen, lokalen Netzwerk aufgebaut werden kann. Von diesen Zugangspunkten wird dann auf verschiedenen Kanälen operiert und kann mit überlappender Abdeckung installiert werden.

Bei Wireless LAN wird von jedem Zugangspunkt auf einem eigenen Kanal gearbeitet, wobei diese Zugangspunkte über einen so genannten Ethernet-Backbone verbunden sind. Auch bei mehreren Zugangspunkten in einem Bereich wird die verfügbare Kapazität daher nicht gesteigert, da von einem Endgerät bzw. einer so genannten Station (z.B. Tablet-PC, Laptop, Smartphone, etc.) immer jenen Zugangspunkt ausgewählt wird, welche mit dem besten Signal-zu-Rausch-Verhältnis erreicht werden kann. Im Gegensatz zu Mobilfunknetzen wie z.B. einem GSM- oder einem 3G-Funknetz ist in einem drahtlosen, lokalen Netzwerk auf Basis der IEEE-Norm 802.11 keine so genannte Zelldetektion von benachbarten Funkzellen bzw. Zugangspunkten vorgesehen. Aus diesem Grund werden bei Wireless LAN Endgeräte bzw. Station auch nicht von einem z.B. stark belasteten Zugangspunkt, in welchem viele Endgeräte eingebucht sind, zu einem anderen, verfügbaren Zugangspunkt mit geringerer Auslastung umgeleitet bzw. eine Lastverteilung zwischen den Zugangspunkten eines vorgegebenen Bereichs durchgeführt. Dies kann zu einer Verschlechterung der Netz-Performance, schlechter Ressourcennutzung, etc. führen.

Aus der Schrift "H. Velayos, V. Aleo, G. Karlsson, "Load Balancing in Overlapping Wireless LAN Cells," IEEE ICC, Juni 2004" ist daher beispielsweise ein Verfahren zur Lastverteilung in einem Wireless LAN bekannt, um vor allem in Bereichen, in welchen es zu einer Konzentration von Nutzer des drahtlosen, lokalen Netzwerkes bzw. von das Wireless LAN nutzenden Endgeräten kommen kann wie z.B. Beförderungsmitteln, etc., eine Verteilung der sich einbuchenden Endgeräte bzw. Stationen auf mehrere, im Bereich verfügbare Zugangspunkte zu erzielen. Um eine derartige Lastverteilung zu erreichen, wird ein so genannter Lastverteilungsagent in jedem Zugangspunkt installiert. Aufgrund einer im IEEE-Standard 802.11 fehlenden Netzwerk induzierten Prozedur für eine Verbindungsübergabe bzw. Handover kann von einem Zugangspunkt mit sehr hoher Auslastung allerdings nur eine Trennungsnachricht an das Netzzugang suchende Endgerät bzw. die Netzzugang suchende Station gesendet werden und von der abgewiesenen Station muss dann ein neuer Zugangspunkt im vom drahtlosen, lokalen Netzwerk bzw. Wireless LAN abgedeckten Bereich gesucht werden. Sind auch weitere Zugangspunkte überlastet oder ausgelastet, so wird der Verbindungsversuch des Endgerätes bzw. der Station zurückgewiesen. Die Station muss daher solange im Bereich weiter suchen, bis ein Zugangspunkt mit ausreichender Kapazität im Bereich (z.B. Beförderungsmittel) gefunden wird, um einen Zugang zum drahtlosen, lokalen Netzwerk bzw. Wireless LAN herzustellen. Damit weist das in der Schrift "H. Velayos, V. Aleo, G. Karlsson, "Load Balancing in Overlapping Wireless LAN Cells," IEEE ICC, Juni 2004" beschriebene Verfahren den Nachteil auf, dass ein Umleiten der Station auf einen Zugangspunkt mit entsprechender Kapazität relativ lange dauern kann, da für einen erfolgreichen Netzzugang mehrere Zugangspunkte ausprobiert werden müssen.

Eine weitere Möglichkeit eine Lastverteilung in einem drahtlosen, lokalen Netzwerk wie einem Wireless LAN zu erzielen, besteht beispielsweise darin, einen erwarteten Bedarf an Zugangskapazität für die jeweiligen einen Netzzugang suchenden Endgeräte bzw. Stationen abzuschätzen und dann entsprechende Zugangspunkte mit geringerer Auslastung dem jeweiligen Endgerät bzw. der jeweiligen Station zuzuweisen. Derartige Verfahren weisen allerdings den Nachteil auf, dass der Status bzw. die Auslastung eines Zugangspunktes bei Aufbau und/oder Übergabe einer Verbindung überprüft werden muss. Damit kann es auch bei dieser Vorgehensweise zu Verzögerungen bei Verbindungsaufbau und/oder bei einer Verbindungsübergabe kommen. Dies kann beispielsweise dann Verzögerungen oder Störungen bei einer Übertragung von Daten bzw. Informationsinhalten zur Folge haben.

Aus der Schrift US 2011/0130149 A1 ist ein weiteres Verfahren zur Lastverteilung in einem drahtlosen Netzwerk, insbesondere Wireless LAN, bekannt. Dabei werden von den Zugangspunkten des drahtlosen Netzwerks auch aktuelle Betriebscharakteristika (z.B. empfangene Signalstärke, etc.) von jeweils benachbarten oder in der Nähe befindlichen Zugangspunkte ermittelt und gesammelt. Einem Endgerät bzw. einer Station, von welcher eine Verbindung zu einem ersten Zugangspunkt aufgebaut wird, wird dann auf Anfrage mittels eines Funksignals ein Report von benachbarten Zugangspunkten mit z.B. jeweiliger Empfangssignalstärke, Information über die jeweils verfügbare Kapazität, etc. gesendet, wobei vom ersten Zugangspunkt auf Basis der gesammelten Betriebscharakteristika der benachbarten Zugangspunkte ein Vorauswahl getroffen wird. Durch ein Übersenden des Reports an das Endgerät und durch ein Auswerten des Reports auf dem Endgerät kann es allerdings ebenfalls zu Verzögerungen beim Umlenken der Verbindung auf einen anderen Zugangspunkt kommen. Diese Verzögerungen können dann ebenfalls zu Störungen - insbesondere bei Datenübertragungen, welche eine hohe Qualität benötigen (z.B. Video-Streaming, Voiceover-IP, etc.) - führen.

Die US 2006/268767 A1 beschreibt ein drahtloses Kommunikationssystem mit einem Access Point Management Server, mittels welchem auf der Basis von Informationen über verfügbare Zugangspunkte (Access Points) eine Bandbreitenreservierung für eine Datenverbindung zwischen einem Client und einem Server vorgenommen wird.

### Darstellung der Erfindung

Der Erfindung liegt daher die Aufgabe zugrunde, ein Verfahren zur Lastverteilung in einem drahtlosen, lokalen Netzwerk mit zumindest zwei Zugangspunkten anzugeben, durch welches auf einfache Weise ein optimale Nutzung der verfügbaren Ressourcen im Netzwerk erzielt und eine sichere, verzögerungs- und störungsfreie Übertragung von multimedialen Informationsinhalten zu einer nutzerspezifischen Ausgabeeinheit ermöglicht wird.

Diese Aufgabe wird durch ein Verfahren der eingangs angeführten Art mit den Merkmalen gemäß dem unabhängigen Patentanspruch gelöst. Vorteilhafte Ausführungsformen der vorliegenden Erfindung sind in den abhängigen Ansprüchen beschrieben. Erfindungsgemäß erfolgt die Lösung der Aufgabe mit einem Verfahren der eingangs erwähnten Art, bei dem vom On-Board-Server eine Anwendung auf die nutzerspezifische Ausgabeeinheit geladen und auf dieser installiert wird. Bei Anforderung von multimedialen Informationsinhalten über die nutzerspezifischen Ausgabeeinheit werden von der Anwendung alle für die nutzerspezifische Ausgabeeinheit verfügbaren Zugangspunkte im vorgegebenen Bereich (z.B. Beförderungsmittel, etc.) zum drahtlosen, lokalen Netzwerk gescannt und dann wird eine Verfügbarkeitsinformation an den On-Board-Server gesendet. Vom On-Board-Server wird dann auf Basis der gesendeten Verfügbarkeitsinformation eine Bandbreite der für die Ausgabeeinheit verfügbaren Zugangspunkte geprüft und ein zweiter Zugangspunkt mit der für die Übertragung der multimedialen Informationsinhalte verfügbaren Bandbreite ausgewählt. Dieser zweite Zugangspunkt wird dann der nutzerspezifischen Ausgabeeinheit durch eine Kommandoinformation als Zugangspunkt zum drahtlosen, lokalen Netzwerk zugeordnet.

Der Hauptaspekt der erfindungsgemäß vorgeschlagenen Lösung besteht darin, dass von einer zentralen Einheit wie z.B. dem On-Board-Server eine Anwendung für die nutzerspezifischen Ausgabeeinheiten zur Verfügung gestellt wird, über welche aus Sicht der jeweiligen Ausgabeeinheit verfügbare Zugangspunkte gescannt werden können. Von dieser zentralen Einheit bzw. dem On-Board-Server wird dann auch die Zuordnung der Zugangspunkte zu den jeweiligen Ausgabeeinheiten gesteuert. Dabei kann sehr einfach auch eine aufgrund der jeweils gewählten multimedialen Informationsinhalte notwendige Bandbreite bzw. Kapazität für die Übertragung dieser Informationsinhalte berücksichtigt werden. D.h. es kann eine sehr genaue Vorhersage eines Bedarf an Kapazität bzw. Bandbreite für die jeweilige nutzerspezifische Ausgabeeinheit vorgenommen werden und dann entsprechend ein Zugangspunkt, von welchem diese Kapazität bzw. Bandbreite zur Verfügung gestellt werden kann, der Ausgabeeinheit zugeordnet werden. Dadurch können nicht nur die im drahtlosen, lokalen Netzwerk verfügbaren Ressourcen optimal und effizient genutzt werden, sondern auch Störungen bei der Übertragung der multimedialen Informationsinhalte verhindert und Verzögerungen reduziert werden.

Es ist vorteilhaft, wenn durch die Anwendung auf der nutzerspezifischen Ausgabeeinheit die Kommandoinformation ausgewertet und dann die Verbindung der nutzerspezifischen Ausgabeeinheit zum zweiten Zugangspunkt umgeleitet wird. Auf diese Weise können dann die angeforderten multimedialen Informationsinhalte rasch und störungsfrei auf die nutzerspezifische Ausgabeeinheit übertragen werden.

Es ist weiterhin günstig, wenn nach Beendigung einer Übertragung von multimedialen Informationsinhalten auf die nutzerspezifische Ausgabeeinheit die Verbindung dieser nutzerspezifischen Ausgabeeinheit zum On-Board-Server wieder auf den ersten Zugangspunkt zurückgelenkt wird. Dazu kann nach Beendigung der Übertragung der nutzerspezifischen Ausgabeeinheit vom On-Board-Server wieder der erste Zugangspunkt zugeordnet werden und ein Umleiten der Verbindung mittels einer entsprechenden Kommandoinformation, welche an die nutzerspezifische Ausgabeeinheit gesendet wird, durchgeführt werden. Auf diese Weise können sehr einfach und rasch durch die Übertragung der multimedialen Informationsinhalte belegte Ressourcen z.B. am zweiten Zugangspunkt wieder freigegeben werden. Diese Ressourcen stehen dann anderen Ausgabeeinheit für eine Übertragung von Informationsinhalten zur Verfügung und es wird für eine effiziente Ausnutzung der verfügbaren Infrastruktur und Ressourcen des drahtlosen, lokalen Netzwerks im vorgegebenen Bereich gesorgt.

Idealerweise wird in der Kommandoinformation des On-Board-Servers zumindest eine zugangspunktspezifische Kennung verwendet. Durch die zugangspunktspezifische Kennung kann der vom On-Board-Server zugeordnete Zugangspunkt von der Anwendung in der nutzerspezifischen Ausgabeeinheit eindeutig identifiziert und angesprochen werden. Damit kann dann die Verbindung sehr einfach auf den neuen (zweiten) Zugangspunkt umgelenkt bzw. an den neuen (zweiten) Zugangspunkt übergeben werden. Als zugangspunktspezifische Kennung kann beispielsweise eine so genannter Service Set Identification (SSID) verwendet werden oder eine so genannter Basic Service Set Identification(BSSID).

Ein Service Set Identification ist ein frei wählbarer Name eines so genannte Service Sets bzw. einer drahtlosen Netzzelle, welche von einem Zugangspunkt gebildet wird. Die SSID wird üblicherweise vom Netzbetreiber vergeben und wird gewöhnlich im jeweiligen Zugangspunkt festgelegt und von diesem standardmäßig bei jedem ausgehenden Paket versendet. Über die SSID ist damit ein bestimmter Zugangspunkt und damit die Netzzelle des Wireless LAN eindeutig identifizierbar, da von einem anderen Zugangspunkt eine andere Netzzelle gebildet bzw. ein anderer Kanal für einen Netzzugang zur Verfügung gestellt wird. Weiterhin besteht die Möglichkeit für einen Zugangspunkt mehrere SSIDs zu verwenden und damit mehrere so genannte virtuelle drahtlose, getrennte Netzzellen anzubieten. Über die SSID wird dann die jeweilige virtuelle Netzzelle identifiziert.

Alternativ kann anstatt der SSID als zugangspunktspezifische Kennung auch die so genannte Basic Service Set Identification oder BSSID verwendet werden. Durch die BSSID wird z.B. ein Zugangspunkt eindeutig gekennzeichnet. Eine BSSID entspricht im Prinzip einer so genannten MAC-Adresse des Zugangspunktes oder die BSSID kann auch einen Zufallszahl sein. Mit Hilfe der BSSID kann von der nutzerspezifischen Ausgabeeinheit beispielsweise Bänder am Zugangspunkt gewechselt werden. Das führt zu einer Reduktion einer Liste von möglichen Zugangspunkten auf Seite der nutzerspezifischen Ausgabeeinheit und ein optimaler Zugangspunkt kann damit rascher ermittelt werden.

Werden weiterhin die SSIDs der jeweiligen Zugangspunkte - beispielsweise mit Ausnahme eines ersten Zugangspunkts - nicht öffentlich versendet, so kann z.B. auch ein erstmaliger Verbindungsaufbau zum On-Board-Server über das drahtlose, lokale Netzwerk auf diesen bestimmten ersten Zugangspunkt kanalisiert werden. So kann z.B. nur dieser Zugangspunkt für die Ausgabeeinheiten als verfügbar erscheinen und damit ein Verbindungsaufbau über diesen Zugangspunkt gelenkt werden.

In weiterer Ausgestaltung des erfindungsgemäßen Verfahrens ist es daher vorteilhaft, wenn für eine Bewertung und Auswahl eines geeigneten Zugangspunkts zum drahtlosen, lokalen Netzwerk als Verfügbarkeitsinformation eine von der Ausgabeeinheit empfangene Signalstärke - eine so genannte Received Signal Strength Idication oder RSSI - der jeweils für die Ausgabeeinheit verfügbaren Zugangspunkte verwendet wird. Die RSSI stellt einen Indikator für eine Empfangsfeldstärke in einem drahtlosen Kommunikationsnetzwerk dar. Dieser Indikator wird dann von der Anwendung in der nutzerspezifischen Ausgabeeinheit eingesetzt, um einen für eine Kommunikation bzw. für eine Verbindung mit dem drahtlosen, lokalen Netzwerk brauchbaren Kanal und damit Zugangspunkt zu finden. D.h. für eine erfolgreiche Kommunikation wird auf einem aktuell benutzten Kanal eine bestimmte Mindest-RSSI benötigt. Damit kommen als Zugangspunkte für die Ausgabeeinheit nur jene Zugangspunkte in Betracht, welche eine bestimmte RSSI aufweisen. Diese Zugangspunkte mit der entsprechenden RSSI werden dann in der Verfügbarkeitsinformation an den On-Board-Server weitergeleitet.

Bei einer bevorzugten Fortbildung der Erfindung wird über den ersten Zugangspunkt ein unverschlüsselter Zugang zum drahtlosen, lokalen Netzwerk und damit zum On-Board-Server zur Verfügung gestellt. Damit kann den nutzerspezifischen Ausgabeeinheiten ein einfacher und rascher Zugang zum drahtlosen, lokalen Netzwerk und zur zu installierenden Anwendung ermöglicht werden. Durch einen Einschränkung des unverschlüsselten Zugangs auf einen bestimmten Zugangspunkt ist dieser unverschlüsselte Zugang auch einfach kontrollierbar. Ein Zugang über die weiteren Zugangspunkte - insbesondere für ein Anforderung bzw. ein Übertragen von multimedialen Informationsinhalten - kann dann beispielweise verschlüsselt durchgeführt werden.

Eine entsprechende Authentifizierungsinformation z.B. zum Bezug von geschützten Informationsinhalten kann beispielsweise in vorteilhafter Weise in der Kommandoinformation vom On-Board-Server für die jeweilige Ausgabeeinheit zur Verfügung gestellt werden. Dabei kann z.B. vom On-Board-Server geprüft werden, ob ein Nutzer zum Bezug des jeweiligen Informationsinhalts berechtigt ist (z.B. den Inhalt bezahlt, etc. hat).

### Kurzbeschreibung der Zeichnung

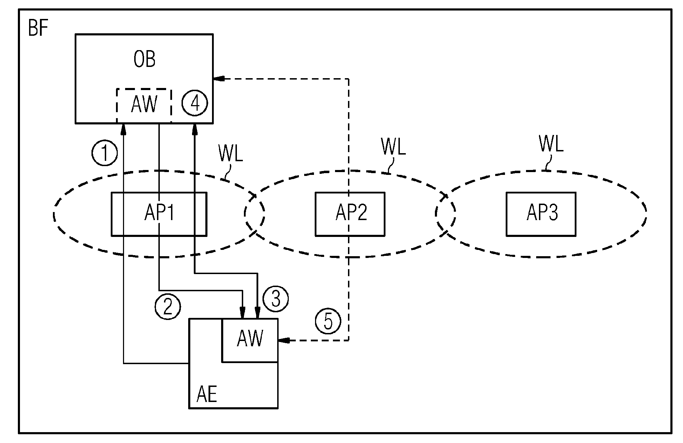

Die Erfindung wird nachfolgend in beispielhafter Weise anhand der beigefügten Figur erläutert. Figur 1 zeigt dabei schematisch und in beispielhafter Weise einen Ablauf des Verfahrens zur Lastverteilung in einem beispielhaften drahtlosen, lokalen Netzwerk mit zumindest zwei Zugangspunkten.

### Ausführung der Erfindung

Figur 1 zeigt in schematischer Weise beispielhaft einen Ablauf des erfindungsgemäßen Verfahrens zur Lastverteilung in einem drahtlosen, lokalen Netzwerk WL - insbesondere Wireless LAN bzw. Netzwerk auf Basis der IEEE-Norm 802.11 - in einem vorgegebenen Bereich wie z.B. einem Beförderungsmittel. Dieses Beförderungsmittel BF kann z.B. ein Flugzeug, ein Zug oder aber auch ein Passagierschiff sein, in welchem die Passagiere über ein Informationssystem mit multimedialen Informationsinhalten (z.B. Filme, Musik, Videos, Nachrichtenprogramme, etc.) versorgt werden können. Diese multimedialen Informationsinhalte können auf nutzerspezifischen Ausgabeeinheiten AE (z.B. Tablet-PC, Smartphone, Laptop, etc.) angezeigt und auf diese Weise von den Passagieren bzw. Nutzern des Beförderungsmittel BF konsumiert werden können.

Dieses Informationssystem besteht aus einer zentralen Servereinheit - einem so genannten On-Board-Server OB, welcher innerhalb des Beförderungsmittels BF angebracht ist. Für eine Auswahl, Anforderung und einen Zugriff auf die multimedialen Informationsinhalte wird zwischen dem On-Board-Server OB und der beispielhaft dargestellten Ausgabeeinheit AE eine Verbindung über ein drahtloses, lokales Netzwerk WL aufgebaut. Das drahtlose, lokale Netzwerk WL bzw. Wireless LAN für den Zugang zum On-Board-Server OB wird dabei von zumindest zwei - in Figur 1 sind beispielhaft drei Zugangspunkte AP1, AP2, AP3 dargestellt - gebildet. Von jedem Zugangspunkt AP1, AP2, AP3 wird dabei auf unterschiedlichen Kanälen oder sogar in verschiedenen Frequenzbändern übertragen und damit eine eigene Netzwerkzelle bzw. ein eigenes kleines lokales Netzwerk gebildet. Ein jeweiliger Zugangspunkt AP1, AP2, AP3 kann über eine sogenannte Service Set Identification oder SSID bzw. über eine Basic Service Set Identification oder BSSID eindeutig beispielsweise für einen Verbindungsaufbau bzw. Netzzugang identifiziert werden. Dabei kann die SSID vom jeweiligen Zugangspunkt AP1, AP2, AP3 ausgesendet werden, damit der jeweilige Zugang zum drahtlosen, lokalen Netzwerk WL von den nutzerspezifischen Ausgabeeinheiten AE gefunden wird.

Alternativ kann ein Aussenden der SSID durch den jeweiligen Zugangspunkt AP1, AP2, AP3 auch unterdrückt werden. So kann z.B. nur ein erster Zugangspunkt AP1, welcher z.B. im Gegensatz zu den anderen Zugangspunkten AP2, AP3 einen unverschlüsselten Netzzugang zum drahtlosen, lokalen Netzwerk WL zur Verfügung stellt, eine SSID aussenden und damit alle nutzerspezifischen Ausgabeeinheiten bei einer ersten Verbindungsanfrage zum ersten Zugangspunkt AP1 gelenkt werden.

Dann kann von der Ausgabeeinheit AE in einem ersten Verfahrensschritt 1 über den ersten - z.B. unverschlüsselten - Zugangspunkt AP1 eine Verbindung zum On-Board-Server OB über das drahtlose, lokale Netzwerk WL aufgebaut werden. In einem zweiten Verfahrensschritt 2 wird dann eine Anwendung AW vom On-Board-Server OB auf die nutzerspezifische Ausgabeeinheit AE geladen und auf der nutzerspezifischen Ausgabeeinheit AE installiert. Von der Anwendung AW wird einerseits ein sicherer und komfortabler Zugriff auf die multimedialen Informationsinhalte ermöglich, wobei auch urheberrechtliche Aspekte (z.B. digitales Rechte-Management) berücksichtigt werden können.

Andererseits werden von der Anwendung AW bei einer Anforderung von multimedialen Informationsinhalten durch den Nutzer der Ausgabeeinheit AE in einem dritten Verfahrensschritt 3 alle weiteren für die nutzerspezifische Ausgabeeinheit AE verfügbaren Zugangspunkte AP2, AP3 gescannt werden - im in Figur 1 dargestellten Beispiel sind dies z.B. ein zweiter Zugangspunkt AP2 und ein dritter Zugangspunkt ZP3. Von der Anwendung AW wird dabei beispielsweise eine empfangene Signalstärke oder eine so genannter Received Signal Strength Indication bzw. RSSI der weiteren verfügbaren Zugangspunkte AP2, AP3, zu welchen keine Verbindung besteht, geprüft werden. Für ein Ermitteln der RSSI kann von der Anwendung AW beispielsweise bei Ausgabeeinheiten AE auf Basis des so genannten Android-Betriebssystem eine so genannte WifiManager-API oder -Programmierschnittstelle genutzt werden. Bei anderen Ausgabeeinheiten AE können von der Anwendung AW z.B. entsprechende Schnittstellen zum Feststellen der RSSI verwendet werden. Die festgestellte empfangene Signalstärke oder die ermittelte RSSI kann dann von der Anwendung über die über den ersten Zugangspunkt AP1 bestehende Verbindung mit der Anforderung von multimedialen Informationsinhalten als Verfügbarkeitsinformation zum On-Board-Server OB gesendet werden.

In einem vierten Verfahrensschritt 4 kann nun vom On-Board-Server OB eine verfügbare Bandbreite bzw. Datenübertragungsrate der aus Sicht der Ausgabeeinheit AE verfügbaren Zugangspunkte AP2 geprüft werden. D.h. vom On-Board-Server kann beispielsweise festgestellt werden, von welchem der für die Ausgabeeinheit AE verfügbaren Zugangspunkte AP2 die für eine Übertragung der ausgewählten Informationsinhalte notwendige Bandbreite bzw. Datenübertragungsrate zur Verfügung gestellt wird. Durch On-Board-Server OB wird dann ebenfalls im vierten Verfahrensschritt 4 aufgrund der Bandbreiten-Überprüfung der zweite Zugangspunkt AP2 für die Übertragung der multimedialen Informationsinhalte ausgewählt. Vom On-Board-Server OB wird dabei die Ausgabeeinheit AE logisch dem ausgewählten zweiten Zugangspunkt AP2 zugeordnet - z.B. durch entsprechende Reservierung der benötigten Bandbreite bzw. Datenübertragungsrate - und dann eine Kommandoinformation an die Anwendung AW auf der nutzerspezifischen Ausgabeeinheit AE gesendet.

In der Kommandoinformation kann beispielsweise eine zugangspunktspezifische Kennung wie z.B. eine SSID oder eine BSSID für den für die Übertragung der multimedialen Informationsinhalte designierten zweiten Zugangspunkt AP2 enthalten sein. Weiterhin kann die Kommandoinformation noch einen Authentifizierungsinformation enthalten, durch welche insbesondere bei einer Verschlüsselung des Zugangs über den zweiten Zugangspunkt AP2 den Aufbau einer Verbindung über den zweiten Zugangspunkt AP2 zum On-Board-Server OB und/oder einen Bezug von verschlüsselten Informationsinhalten ermöglicht wird.

Die Kommandoinformation wird in einem fünften Verfahrensschritt 5 von der Anwendung AW auf der Ausgabeeinheit AE ausgewertet. Dabei wird von der Anwendung beispielsweise eine Zugangspunkt-Konfiguration der Ausgabeeinheit AE umkonfiguriert. D.h. in einer Liste der Netzzugänge wird nun der ausgewählte zweite Zugangspunkt AP2 mit einer höchsten Priorität versehen bzw. an erste Stelle der Liste gestellt. Dazu kann z.B. bei Android-basierten Ausgabeeinheiten AE wieder das so genannte WifiManager-API genutzt werden. Auf diese Weise wird die nutzerspezifische Ausgabeeinheit AE von der Anwendung im fünften Verfahrensschritt gezwungen, die Verbindung zum On-Board-Server über den zweiten Zugangspunkt AP2 aufzubauen bzw. die Verbindung auf den zweiten Zugangspunkt AP2 umzulenken. Die angeforderten multimedialen Informationsinhalte werden dann vom On-Board-Server mittels der Verbindung zum drahtlosen, lokalen Netzwerk WL über den zweiten Zugangspunkt AP2 an die Ausgabeeinheit AE übertragen.

Nach Beendigung der Übertragung der multimedialen Informationsinhalte an die Ausgabeeinheit AE kann - z.B. gesteuert durch den On-Board-Server OB - die Verbindung der Ausgabeeinheit AE zum On-Board-Server wieder auf den ersten Zugangspunkt AP1 zurückgeleitet werden. Diese wird nach derselben Vorgehensweise wie in den Verfahrensschritten 4 und 5 durchgeführt werden. Vom On-Board-Server OB wird dabei der Ausgabeeinheit AE logisch der erste Zugangspunkt AP1 zugeordnet und dann mittels einer entsprechenden Kommandoinformation, welche von der Anwendung AW ausgewertet und umgesetzt wird, die Verbindung zwischen Ausgabeeinheit AE und On-Board-Server wieder über den ersten Zugangspunkt AP1 aufgebaut. Auf diese Weise werden die auf dem zweiten Zugangspunkt AP2 reservierten und nach der Übertragung der Informationsinhalte nicht mehr benötigten Ressourcen (z.B. Bandbreite, etc.) wieder freigegeben und können nun für andere Übertragungen bzw. von anderen Ausgabeeinheiten AE genutzt werden.

Parallel können vom On-Board-Server OB - als zentrale Steuereinheit - andere nutzerspezifische Ausgabeeinheiten AE nach demselben Verfahrensschritten 1 bis 5 gezwungen werden, jeweils im Beförderungsmittel BF verfügbare Zugangspunkte AP1, AP2, AP3 für die Übertragung von Informationsinhalten zu nutzen. Dadurch kann eine ausbalancierte Lastverteilung auf die im Beförderungsmittel BF vorhandenen Zugangspunkte AP1, AP2, AP3 auf sehr einfache Weise erzielt und die vorhandenen Ressourcen optimal genutzt werden. Weiterhin kann ein Ressourcenbedarf einer nutzerspezifischen Ausgabeeinheit AE relativ genau vorhergesagt werden, wenn bekannt ist, welches spezielle Service bzw. welche speziellen multimedialen Informationsinhalte von dieser Ausgabeeinheit AE genutzt werden. Durch eine Überwachung von Funkparametern wie z.B. RSSI, Bandbreite, Übertragungsrate, etc. einer Verbindung zwischen Ausgabeeinheit AE und Zugangspunkt AP1, AP2, Ap3 bzw. On-Board-Server OB und z.B. durch Kontrolle einer Video-Abspiel-Performance bzw. eine Pufferung der multimedialen Informationsinhalte (z.B. Video-Streams, etc.) innerhalb der Anwendung AW können durch das erfindungsgemäße Verfahren beispielsweise auf sehr einfache Weise eine optimale Anzahl an angebundenen Ausgabeeinheiten AE, eine Bandbreite z.B. für Streaming und Video-Qualität, etc. je Zugangspunkt AP1, AP2, AP3 des drahtlosen, lokalen Netzwerks WL algorithmisch ausgewählt werden.

## Patentansprüche

1. Verfahren zur Lastverteilung in einem drahtlosen, lokalen Netzwerk (WL) mit zumindest zwei Zugangspunkten (AP1, AP2, AP3), über welches in einem vorgegebenen Bereich (BF), insbesondere einem Beförderungsmittel, multimediale Informationsinhalte von einem so genannten On-Board-Server (OB) bezogen und auf nutzerspezifischen Ausgabeeinheit (AE) angezeigt werden, wobei über einen ersten Zugangspunkt (AP1) des drahtlosen, lokalen Netzwerks (WL) von der nutzerspezifischen Ausgabeeinheit (AE) eine Verbindung zum On-Board-Server (OB) aufgebaut wird
**(1), dadurch gekennzeichnet, dass** dann vom On-Board-Server (OB) eine Anwendung (AW) geladen und auf der nutzerspezifischen Ausgabeeinheit (AE) installiert wird (2),
- dass bei Anforderung von multimedialen Informationsinhalte über die nutzerspezifischen Ausgabeeinheit (AE) von der Anwendung (AW) alle für die nutzerspezifische Ausgabeeinheit (AE) verfügbaren Zugangspunkte (AP2, AP3) zum drahtlosen, lokalen Netzwerk (WL) gescannt werden und eine Verfügbarkeitsinformation an den On-Board-Server (OB) gesendet wird (3),
- dass dann vom On-Board-Server (OB) auf Basis der gesendeten Verfügbarkeitsinformation eine Bandbreite der für die Ausgabeeinheit (AE) verfügbaren Zugangspunkte (AP2, AP3) geprüft wird und ein zweiter Zugangspunkt (AP2) mit der für die Übertragung der multimedialen Informationsinhalte verfügbaren Bandbreite ausgewählt wird (4),
- und dass dann der nutzerspezifischen Ausgabeeinheit (AE) durch eine Kommandoinformation dieser zweite Zugangspunkt (AP2) als Zugangspunkt zum drahtlosen, lokalen Netzwerk (WL) zugeordnet wird (5).

2. Verfahren nach Anspruch 1, **dadurch gekennzeichnet, dass** durch die Anwendung (AW) auf der nutzerspezifischen Ausgabeeinheit (AE) die Kommandoinformation ausgewertet und die Verbindung der nutzerspezifischen Ausgabeeinheit (AE) zum On-Board-Server (OB) zum zweiten Zugangspunkt (AP2) umgeleitet wird (5).

3. Verfahren nach einem der Ansprüche 1 bis 2, **dadurch gekennzeichnet, dass** nach Beendigung einer Übertragung der angeforderten, multimedialen Informationsinhalte auf die Ausgabeeinheit (AE) die Verbindung der Ausgabeeinheit (AE) zum On-Board-Server (OB) wieder auf den ersten Zugangspunkt (AP1) zurückgelenkt wird.

4. Verfahren nach einem der Ansprüche 1 bis 3, **dadurch gekennzeichnet, dass** in der Kommandoinformation des On-Board-Servers (OB) zumindest eine zugangspunktspezifische Kennung verwendet wird (4).

5. Verfahren nach Anspruch 4, **dadurch gekennzeichnet, dass** als zugangspunktspezifische Kennung ein so genannter Service Set Identifier verwendet wird (4).

6. Verfahren nach Anspruch 4, **dadurch gekennzeichnet, dass** als zugangspunktspezifische Kennung ein so genannter Basic Service Set Identifier verwendet wird(4).

7. Verfahren nach einem der Ansprüche 1 bis 6, **dadurch gekennzeichnet, dass** von der Kommandoinformation weiterhin eine Authentifizierungsinformation umfasst wird (4).

8. Verfahren nach einem der Ansprüche 1 bis 7, **dadurch gekennzeichnet, dass** für eine Bewertung und Auswahl eines geeigneten Zugangspunkts (AP2, AP3) zum drahtlosen, lokalen Netzwerk (WL) als Verfügbarkeitsinformation eine von der Ausgabeeinheit empfangene Signalstärke der jeweils für die Ausgabeeinheit (AE) verfügbaren Zugangspunkte (AP2, AP3) verwendet wird.

9. Verfahren nach einem der Ansprüche 1 bis 8, **dadurch gekennzeichnet, dass** über den ersten Zugangspunkt (AP1) ein unverschlüsselter Zugang zum drahtlosen, lokalen Netzwerk (WL) und zum On-Board-Server (OB) zur Verfügung gestellt wird.

## Claims

1. Method for load distribution in a wireless local area network (WLAN) having at least two access points (AP1, AP2, AP3), by way of which, in a predetermined area (BF), in particular a means of conveyance, multimedia information contents are obtained from what is known as an on-board server (OB) and displayed on a user-specific output unit (AE), wherein a link is established (1) between the user-specific output unit (AE) and the on-board server (OB) by way of a first access point (AP1) of the wireless local area network (WLAN),
**characterised in that** an application (AW) is then loaded by the on-board server and installed (2) on the user-specific output unit (AE),
- that when the user-specific output unit (AE) requests multimedia information contents, the application (AW) scans all access points (AP2, AP3) to the wireless local area network (WLAN) which are available to the user-specific output unit (AE) and an item of availability information is sent (3) to the on-board server (OB),
- that a bandwidth of the access points (AP2, AP3) which are available to the output unit (AE) is then checked by the on-board server (OB) on the basis of the item of availability information sent and a second access point (AP2) is selected (4) with the bandwidth which is available for the transmission of the multimedia information contents,
- and that this second access point (AP2) is then assigned (5) by a command information to the user-specific output unit (AE) as an access point to the wireless local area network (WLAN).

2. Method according to claim 1, **characterised in that** the command information is evaluated by the application (AW) on the user-specific output unit (AE) and the link between the user-specific output unit (AE) and the on-board server (OB) is rerouted (5) to the second access point (AP2).

3. Method according to one of claims 1 to 2, **characterised in that** after terminating a transmission of the requested multimedia information contents to the output unit (AE), the link between the output unit (AE) and the on-board server (OB) is guided back again to the first access point (AP1).

4. Method according to one of claims 1 to 3, **characterised in that** at least one access point-specific identifier is used (4) in the command information of the on-board server (OB).

5. Method according to claim 4, **characterised in that** what is known as a service set identifier is used (4) as an access point-specific identifier.

6. Method according to claim 4, **characterised in that** what is known as a basic service set identifier is used (4) as an access point-specific identifier.

7. Method according to one of claims 1 to 6, **characterised in that** an item of authentication information is also included (4) in the command information.

8. Method according to one of claims 1 to 7, **characterised in that** a signal strength, received by the output unit, of the access points (AP2, AP3) which are available in each case for the output unit (AE), is used as availability information in order to evaluate and select a suitable access point (AP2, AP3) to the wireless local area network (WLAN).

9. Method according to one of claims 1 to 8, **characterised in that** unencrypted access to the wireless local area network (WLAN) and to the on-board server (OB) is made available by way of the first access point (AP1).

## Revendications

1. Procédé de répartition des charges dans un réseau local sans fil (WL) comprenant au moins deux points d'accès (AP1, AP2, AP3) et via lequel des contenus d'information multimédias sont, dans une zone prédéterminée (BF), en particulier un moyen de transport, tirés d'un serveur dit embarqué (OB) et affichés sur une unité de sortie (AE) spécifique à l'utilisateur, une liaison étant établie (1) de l'unité de sortie (AE) spécifique à l'utilisateur vers le serveur embarqué (OB) via un premier point d'accès (AP1) du réseau local sans fil (WL), **caractérisé en ce que**:
- le serveur embarqué (OB) charge alors une application (AW) et l'installe (2) sur l'unité de sortie (AE) spécifique à l'utilisateur ;
- lors de la requête de contenus d'information multimédias via l'unité de sortie (AE) spécifique à l'utilisateur, l'application (AW) scanne tous les points d'accès (AP2, AP3) au réseau local sans fil (WL) disponibles pour l'unité de sortie (AE) spécifique à l'utilisateur et envoie (3) une information de disponibilité au serveur embarqué (OB) ;
- le serveur embarqué (OB) examine alors, sur la base de l'information de disponibilité émise, une largeur de bande des points d'accès (AP2, AP3) disponibles pour l'unité de sortie (AE) et un deuxième point d'accès (AP2) avec la largeur de bande disponible pour la transmission des contenus d'information multimédias est sélectionné (4) ; et
- ce deuxième point d'accès (AP2) est alors associé (5), par une information de commande, à l'unité de sortie (AE) spécifique à l'utilisateur en tant que point d'accès au réseau local sans fil (WL).

2. Procédé selon la revendication 1, **caractérisé en ce que** l'application (AW) évalue l'information de commande sur l'unité de sortie (AE) spécifique à l'utilisateur et réachemine (5) vers le deuxième point d'accès (AP2) la liaison de l'unité de sortie (AE) spécifique à l'utilisateur vers le serveur embarqué (OB).

3. Procédé selon l'une des revendications 1 à 2, **caractérisé en ce que**, après la fin d'une transmission, à l'unité de sortie (AE), des contenus d'information multimédias demandés, la liaison de l'unité de sortie (AE) vers le serveur embarqué (OB) est ramenée au premier point d'accès (AP1).

4. Procédé selon l'une des revendications 1 à 3, **caractérisé en ce qu'**au moins un identifiant spécifique au point d'accès est utilisé (4) dans l'information de commande du serveur embarqué (OB).

5. Procédé selon la revendication 4, **caractérisé en ce qu'**est utilisé (4), en tant qu'identifiant spécifique au point d'accès, ce qu'il est convenu d'appeler un « Service Set Identifier ».

6. Procédé selon la revendication 4, **caractérisé en ce qu'**est utilisé (4), en tant qu'identifiant spécifique au point d'accès, ce qu'il est convenu d'appeler un « Basic Service Set Identifier ».

7. Procédé selon l'une des revendications 1 à 6, **caractérisé en ce que** l'information de commande comprend (4) en outre une information d'authentification.

8. Procédé selon l'une des revendications 1 à 7, **caractérisé en ce qu'**est utilisée, pour une évaluation et une sélection d'un point d'accès approprié (AP2, AP3) au réseau local sans fil (WL), en tant qu'information de disponibilité, une intensité de signal, reçue de l'unité de sortie, des points d'accès (AP2, AP3) respectivement disponibles pour l'unité de sortie (AE).

9. Procédé selon l'une des revendications 1 à 8, **caractérisé en ce qu'**est mis à disposition, via le premier point d'accès (AP1), un accès non crypté au réseau local sans fil (WL) et au serveur embarqué (OB).
